# EUROPEAN PATENT SPECIFICATION

(11) **EP 3 704 672 B1**
(45) Date of publication and mention of the grant of the patent: **27.12.2023**
(21) Application number: 18872818.2
(22) Date of filing: 02.11.2018
(51) Int. Cl.: B60R 25/102, B60R 21/013, G07C 5/08, B60R 25/30, B60R 25/10, G07C 5/00, B60R 21/00, B60R 21/01

(54) **SYSTEM FOR FOR DETECTION OF VEHICLE BODY DAMAGE**
SYSTEM ZUR DETEKTION VON FAHRZEUGKAROSSERIESCHÄDEN
SYSTÈME DE DÉTECTION DE DOMMAGES À LA CARROSSERIE D'UN VÉHICULE

(30) Priority: 03.11.2017 NO 20171747
(43) Date of publication of application: 09.09.2020
(73) Proprietor: Dtecto AS, 7038 Trondheim (NO)
(72) Inventor: LARSEN, Tom Roger, 7082 Kattem (NO)
(74) Representative: Curo AS
(86) International application number: PCT/NO2018/050263
(87) International publication number: WO 2019/088848

(56) References cited:
- WO-A1-2005/088575
- WO-A1-2017/135825
- DE-U1-202008 016 237
- GB-A- 2 506 365
- GB-A- 2 527 781
- US-A- 5 036 467
- US-A1- 2007 152 433
- US-A1- 2009 248 253
- US-A1- 2014 086 419
- US-A1- 2015 019 069

## Description

The present invention is related to a system for detection of vehicle body damage, according to the preamble of claim 1.

### Background

Vehicles that goes in a route or are involved in a rental-pool (buses), has claim on repair visible damages within reasonable time. If exposed to frequent damages this will result in big workshop bills. One way to reduce these workshop bills is to make the drivers pay more attention to driving which would result in that the amount of damage is reduced.

From US5959365A it is known an apparatus to provide a monitoring device for detecting problems associated with the wheels of trucks and trailers. The apparatus comprises one or more individual axle spindle sensors, a programmable microprocessor for receiving and processing the sensor signals to detect an alarm condition and alarm means to alert the driver of a problem with one or more of the wheels.

In DE3937403 A1 it is disclosed a method of monitoring the functionality of vehicle chassis during travel involving the use of vibration detectors whose output signals are processed in a microcomputer and fed to a display. The vibration in each wheel's suspension is measured in the X and Y directions in at least two mutually inclined planes. The output signals are processed and evaluated by the microcomputer with the associated speed signals in digitised form. Especially suitable for monitoring tyre pressure, wheel imbalance and shock absorber state. Noise factors are eliminated to enable improved functionality monitoring during travel.

From CN103223921 it is known a vehicle monitor system based on Internet of Things, which comprises a vibration sensor, a vehicle monitor device, a control module, a memory module, a CDMA (Code Division Multiple Access) wireless transmission module, and a mobile phone terminal, wherein the control module is connected with the vibration sensor, the vehicle monitor device, the CDMA wireless transmission module and the memory module respectively; and the CDMA wireless transmission module is further connected with the mobile phone terminal. The system utilizes the Internet to enable a vehicle owner to find out unusual conditions of the vehicle, and master evidences timely.

US2016144817 describes systems, software, sensors, and applied solutions for detecting incidents associated with a vehicle, where sensors associated with the vehicle identify impacts or proximity alerts to other vehicles and objects and record information related to those detected incidents. The recorded information can be communicated immediately to interested parties of the person or entity (e.g., emergency responders, business contacts) associated with the vehicle, or alternatively, stored for inspection at the vehicle and reviewed at a destination along the vehicle's route. In one example method, operations include detecting an incident associated with a monitored vehicle, where detecting the incident comprises receiving an alert from at least one sensor associated with the vehicle, identifying a location of the vehicle in response to the detection, and storing a record of the detected incident, where the record includes the identified location of the vehicle and a time associated with the detected incident. WO 2017/135825 A1 discloses a system according to the preamble of claim 1.

The prior art solutions are accordingly related to alarm transactions to emergency, and others via mobile telephone, sign up for service. Prior art describes the use of vibration sensors, proximity sensors, collisions, lateral against doors, theft alarm, as well as sensors for monitoring tires according to air pressure, problems with wheels, shafts, etc. It is also known the use of systems using GPS and time for logging information, as well as arranged for saving and reporting damages. However the prior art solutions are not capable of registering events automatically on-line.

The prior art solutions further suffer from not being capable of ensuring that innocent drivers are not wrongly tied to damages.

Prior art solutions further suffer from that they do not provide a solution to aware the drivers to reduce the amount of damage and encouraging the drivers to change driving behaviour.

The prior art solutions further suffer from that they are not capable of detecting so-called scratching damages, and is further not arranged to provide information of direction of vehicle in relation to obstacles the vehicle is in contact with.

Prior art solutions further suffer from that they cannot report damages directly to a vehicle service workshop.

### Object

The main object of the present invention is to provide a system for detection of vehicle body damage partly or entirely solving the lacks of prior art.

It is further an object of the present invention to provide a system capable of registering events automatically, in real-time, on-line.

An object of the present invention is to provide a system ensuring that innocent drivers are not wrongly tied to damage.

It is an object of the present invention to provide a system capable to aware drivers of vehicles to reduce the amount of damage by encouraging the drivers to change driving behaviour.

An object of the present invention is to provide a system arranged for filtering data and provided with a machine learning system that filter out sensor records having suspicious values.

It is an object of the present invention to provide a system capable of detecting location of a body damage along a side of the vehicle.

An object of the present invention is to provide a system capable of connecting time and location of a damage to be able to inform drivers of potential problem areas during driving, such as e.g. narrow streets, turnarounds, garages or depot.

It is an object of the present invention to provide a system capable of reporting damages directly to a vehicle service workshop.

Further objects of the present invention will appear from the following description, claims and attached drawings.

### The invention

A system for detection of vehicle body damage according to the present invention is disclosed in claim 1. Preferable features of the system are disclosed in the dependent claims.

The present invention is related to system for detecting vehicle body damage by monitoring, registering and alerting on-line, in real-time, when and if a vehicle body damage is caused to the vehicle. Vehicle body damage will typically be one or more of: glass damages, body repairs, damage on bumpers and under carriage and similar.

The system according to the present invention comprises a sensor device adapted to be arranged in connection with an exterior surface of the body of a vehicle. By "arranged in connection with an exterior surface of the body of a vehicle" is herein meant that the sensor device is arranged on interior or exterior surface of and in contact with a physical part/component forming at least a part of an exterior surface of the body of a vehicle. A vehicle will in this connection typically be a bus, rental car, carpool fleets, home care vehicle fleets etc.

The sensor device according to the present invention comprises a housing or encapsulation accommodating a sensor module. The sensor module comprises according to the present invention at least one acoustic sensor. The at least one acoustic sensor will be capable of detecting any body damage, from very small damages, such as scratches to more serious damages from collisions.

According to a further embodiment of the present invention the sensor device it further comprises at least one vibration sensor for enhanced detection of more serious damages from collisions.

By a sensor device comprising at least one acoustic sensor and at least one vibration sensor, the sensor device may be arranged to detect very small damages, such as scratches, by means of the at least one acoustic sensor, while the more serious damages from collisions, may be detected by the at least one vibration sensor. By using both vibration sensor and acoustic sensor this will also reduce the number of measurements that will have to be processed to detect a damage.

According to a further embodiment of the sensor device according to the present invention the sensor module further comprises at least one compass sensor or gyroscope, providing moving direction (heading) of the sensor device and/or vehicle at the time of an event.

According to a further embodiment of the sensor device according to the present invention the sensor module further comprises one or more accelerometers.

According to yet a further embodiment of the sensor device according to the present invention the sensor module further comprises at least one temperature sensor.

In a further embodiment of the sensor device according to the present invention the sensor module further comprises at least one smoke, gas and/or fire detection sensor by measuring gas and fire detection from at least VOC (Volatile Organic Compound) and/or the level of CO (Carbon Monoxide) and/or CO2 (Carbon Dioxide).

In a further embodiment of the sensor device according to the present invention the sensor module further comprises sensors to measure the general environment around the sensor, including motion and movement, sound and noise, temperature, humidity and light.

By means of temperature and/or smoke and/or fire detection sensor an early warning of a possible fire is achieved.

Accordingly, the sensor device according to the present invention will be capable of detecting fine shock (rebound) and coarse shock (collisions, heavy braking).

According to the present invention the sensor device is further provided with a sensor control device provided with means and/or software for acquiring sensor data from the sensor module and perform coarse pre-filtering of data and signals from the sensor module.

According to a further embodiment of the sensor device according to the present invention the sensor control device is provided with internal or external memory for storing of sensor data from the sensor module after pre-filtering. This solves the problem one comes in when the amount of data gets too big. If it gets too much data that is supposed to be explained in one time, the big amount of data will be inhibited on the creative process. Through a methodical reduction of the present data basis, one can reduce that problem.

According to a further embodiment of the sensor device according to the present invention the sensor control device is provided with a database containing acoustic signatures of body damages, and the sensor control device is provided with means and/or software for comparing measurements of the acoustic sensor(s) of the sensor module with the stored acoustic signatures in the database to detect damages to the body of the vehicle. The sensor control device can further be provided with means and/or software for locating the position of the damage based on information from acoustic sensors from several sensor devices.

The sensor device is further provided with at least one communication device for internal communication with other sensor devices and a data acquisition unit on the vehicle via MESH Network using one or more of: ZigBee, Bluetooth and Wi-Fi. The communication device can be a one directional communication device or bidirectional communication device. By using a bidirectional communication device it is possible to change settings of the sensors in the sensor module, perform update of software in the sensor device and perform troubleshooting, as well as form a MESH network.

The sensor device according to the present invention further comprises power supply means by that it is connected to a power supply system of the vehicle directly or via a marker light of the vehicle by means of a power module. In a further embodiment of the sensor device the sensor device can further be provided with at least one energy storage, such as battery or super capacitor, and/or energy harvester. According to one embodiment of the energy harvester, the at least one energy harvester is capable of providing at least a part of the energy required to operate the sensor device. The energy harvester can e.g. be a resonant mechanical device in a material capable of generating electric power when subjected to mechanical influence (e.g. acceleration, rotation, bending, etc.), for example a piezoelectric device or be a device capable of transforming mechanical energy or kinetic energy, for example from mechanical vibration, into electric energy. According to one embodiment of the present invention the energy harvester is coupled to an energy storage, such as one or more (Lithium) batteries, or super capacitor.

According to a further embodiment of the present invention the sensor control device is provided with means and/or software for filtering transient noise from the vehicles power supply, and storing required amounts of power in the energy storage to operate the associated sensor(s).

A system according to the present invention comprises a numerous of the mentioned sensor devices arranged and distributed along sides of the body of the vehicle, hereunder arranged in connection with different parts/components of the body forming the exterior surface thereof. Examples of such parts/components are, but not limited to: door, fenders, bumper, bonnet, roof, sides, etc. In many cases it will be difficult for vibration and sound to travel from one part/component to another, such that it can be detected by a sensor device. For proper detection of damages to e.g. doors or bumpers it will in many cases be advantageous that a sensor device is arranged to the door or bumper.

According to a further embodiment of the system according to the present invention the sensor devices are arranged in connection with marker lights along the side of the vehicle. By arranging numerous of the mentioned sensor devices along the body of the vehicle the measured sensor data from the acoustic sensor of the sensor devices can be used to locate an impact along the side of the vehicle.

The system further comprises a data acquisition unit arranged in the vehicle provided with a local communication device for communication with the sensor devices on the vehicle via MESH Network using one or more of: ZigBee, Bluetooth and Wi-Fi or directly.

The data acquisition unit is further provided with an external communication device in the form of GSM, Wi-Fi, NB long range radio, NB-LTE, LoRa or similar long range communication enabling communication with external cloud or local server for storage of measured sensor data from the sensor devices.

The data acquisition unit is further preferably provided with a position system, such as a GPS, GNSS or Glonass device, enabling location information, as well as time information.

The data acquisition unit will accordingly be arranged for forwarding measured and filtered sensor data from the sensor devices to an external cloud or local server for further processing, where the sensor data is added location and time data.

The data acquisition unit can further be arranged for communication with a vehicle driver platform for retrieving a driver identification code of a driver of the vehicle, and assign this to the sensor data which is forwarded to the external cloud or local server.

The system according to the present invention further comprises a data processing device provided with a data extraction module for extracting data from the external cloud or local server. The data processing device is further provided with means and/or software for digital filtering and machine learning of extracted sensor data. The data processing device is further arranged for storage of filters and machine learning methods.

The date processing device can further be provided with a storage module for storing processed data in the external cloud or local server.

The data processing device can further be provided with a data processing API (application programming interface) for communication with a filter and data processing platform.

The system according to the present invention can further preferably comprise an operational device provided with a data extraction module for extracting data from the external cloud or local server. The operational device is further provided with a presentation module comprising means and/or software for presentation of information, messages, warnings, faults and other desired information.

The operational device is further provided with one or more report modules, such as report module for workshop and report module for management. The report module for workshop can further be arranged to an API module for workshop and driver of vehicle. This API module can further be arranged for communication via SMS and/or APP on a vehicle driver platform, and platform for workshop API. The report module for management can be arranged to a management module API arranged for communication with a platform for management API.

The data processing device and operational device can according to a further embodiment be arranged on a computer, tablet or similar to form an operation and maintenance centre, or in other words a central administrative system.

Accordingly, the present invention provides a solution where vehicle damage can be assigned the right driver. By this, one ensures that innocent drivers are not wrongly accused to caused damages on a vehicle.

By the present invention is provided a solution where drivers can be made aware of not optimal driving behaviour such that the driver can change driving behaviour to reduce the amount of damage the driver causes to the vehicle.

The present invention provides a solution that secures and collect all information about damages which can be used to learn, as well as discover and eliminate risk.

By the present invention is provided documentation of location, time, compass direction, as well as identification code for driver of the vehicle ensuring full documentation of an event, such as inflicted damages on body of the vehicle. This will also contribute to make it possible to document and save event per person for reckless driving.

The combination of sensor data and location data also makes it possible to detect hard positions for vehicles to pass (repeated damages on same location). By connecting time and location of a damage, this can be used to inform drivers of potential problem areas during driving, such as e.g. narrow streets, turnarounds, garages or depot.

By the present invention the system is capable of detecting fine (rebounds) and coarse (collisions, heavy braking) events.

By that the present invention provides a solution where the sensor devices filter out sensor data that have suspicious values, this will reduce the amount of sensor data that is saved, and which requires further processing and evaluation, hereunder that the sensor data that is to be processed is related to a relevant event.

Further preferable features and advantageous details of the present invention will appear from the following example description, claims and attached drawings.

### Example

The present invention will below be described in further detail with reference to the attached drawings, where:
Fig. 1a is a principle drawing of a sensor device according to the present invention,
Fig. 1b is a principle drawing of a sensor device according to the present invention integrated behind a side marker light,
Fig. 1c is a principle drawing of a sensor device according to the present invention integrated in a side marker light,
Fig. 1d is a principle drawing of numerous sensor devices according to the present invention arranged in side marker lights of a vehicle,
Fig. 2 is a principle drawing of a system according to the present invention,
Fig. 3 is a principle drawing of a sensor environment and local processing of sensor data in a system according to the present invention, and
Fig. 4 is a principle drawing of a computing environment of a system according to the present invention.

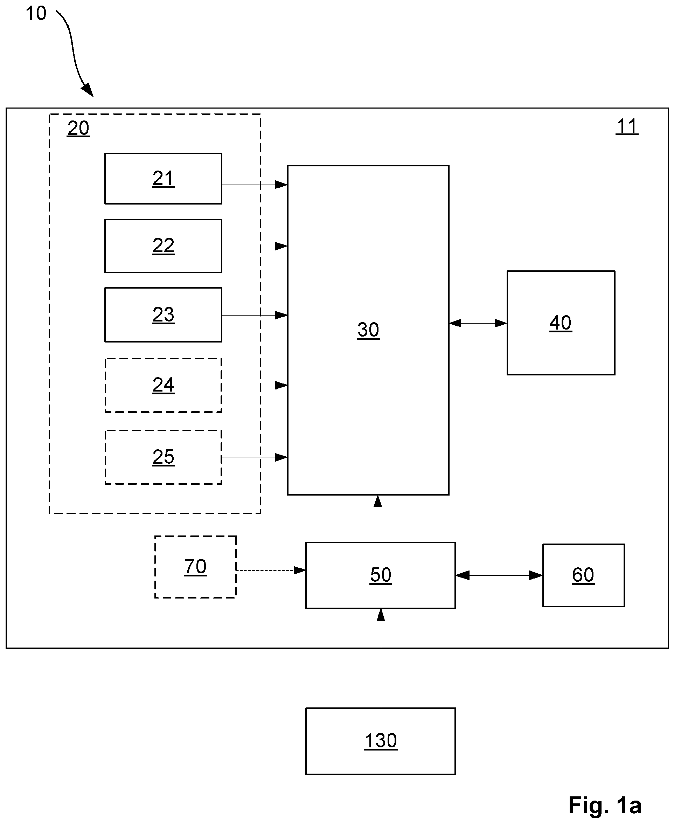

Reference is now made to Figure 1a which is a principle drawing of a sensor device 10 according to the present invention adapted for arrangement in connection with exterior surface of a body 110 of a vehicle 100. The sensor device 10 is formed by a housing or encapsulation 11 adapted for accommodating a sensor module 20, sensor control device 30 and sensor communication device 40. The sensor module 20 comprises at least one acoustic sensor 22. In the shown embodiment the sensor module 20 further comprises at least one vibration sensor 21.

In embodiments where the sensor module 20 only comprises at least one acoustic sensor 22, the at least one acoustic sensor 22 will be arranged to detect both small damages and more serious damages.

In embodiments where the sensor module 20 in addition to the at least one acoustic sensor 22 comprises at least one vibration sensor 21, the at least one acoustic sensor 22 will be arranged to detect small damages while the at least one vibration sensor 21 will be arranged to detect more serious damages.

According to a further embodiment the sensor module 20 may also comprises at least one compass sensor or gyroscope 23. In a further embodiment of the present invention the sensor module 20 can further comprise at least one temperature sensor 24. In a further embodiment the sensor module 20 can comprise at least one smoke and/or fire detection sensor 25. The sensor device 10 is further provided with a power module 50 provided with means and/or software, such as filters, DC/DC converter, (low drop-out) regulator, for adapting and controlling voltage and current supplied to components of the sensor device 10 from a vehicle power supply 130 either directly or via a side marker light 120. The sensor device 10 can further be provided with an energy storage 60, e.g. in the form of one or more super capacitors and/or batteries providing back-up power. The power module 50 will in this connection preferably be provided with at least one charger circuit for adapting and controlling voltage and current for charging of the energy storage 60. Alternatively, or in addition, the sensor device 10 can be provided with an energy harvester 70 providing power to charge the at least one energy storage 60 and allow the sensor device 10 to function when the motor of the vehicle is stopped.

In embodiments where back-up power is not required, the energy storage 60 and energy harvester 70 can be omitted and the sensor device 10 can be connected directly to the vehicle power supply 130 or via the side marker light 120.

The sensor communication device 40 is preferably a short range wireless communication device, such as Wi-Fi, Bluetooth or other wireless MESH module, and the sensor communication device 40 is arranged for one-directional or bi-directional communication enabling communication with a data acquisition unit 80, further described below. In the case the communication device 40 is arranged for bi-directional communication this will enable the sensor devices 10 to form a MESH network, as well as change settings of the sensors in the sensor module, perform update of software in the sensor device 10 and perform troubleshooting.

According to a further embodiment of the present invention the sensor control device 30 is provided with means and/or software for filtering transient noise from the vehicles power supply 130, and storing required amounts of power in the energy storage 60 to operate the associated sensor(s) 21-25.

The mentioned compass sensor 23 can e.g. be formed by a magnetometer. In an alternative embodiment, the compass sensor 23 is formed by a magnetometer and at least one accelerometer.

By that the sensor device 10 is provided with temperature sensor 24 and/or smoke and/or fire detection sensor 25 an early warning of possible fire can be detected.

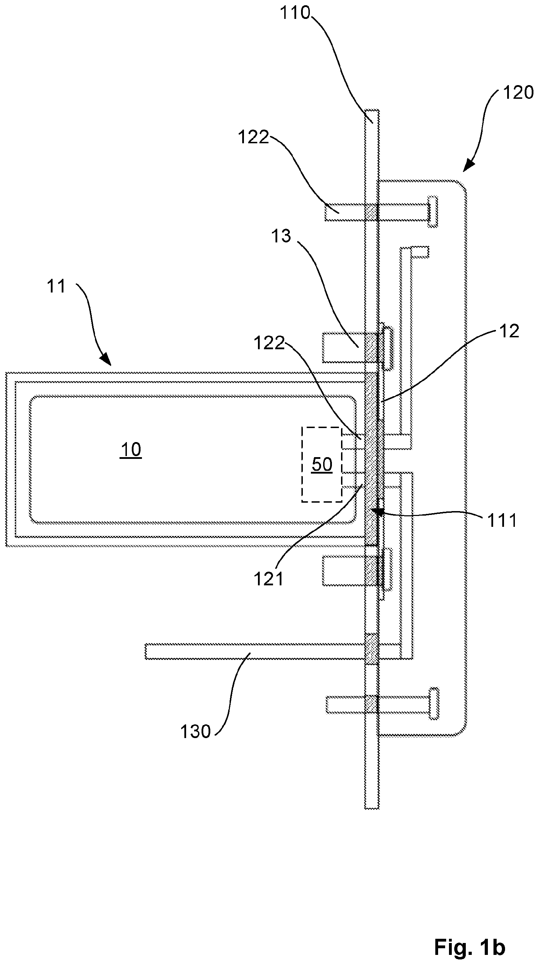

Reference is also made to Figure 1b which shows a principle drawing of an example of integration of a sensor device 10 according to the present invention behind a (LED) side marker light 120 of a vehicle 100, seen in a cross-sectional view. As can be seen from the example the sensor device 10 is supplied with power from a vehicle power supply 130 via the side marker light 120 by that the sensor device 10 is connected to the vehicle power supply 130 in the side marker light 120 by means of power wires 121 connected to the power module 50 of the sensor device 10 via appropriate connection means, and the marker light 120 is connected to the power supply 130 via power wires 122 connected to the power module 50 of the sensor device 10 and supplied with power via the sensor device 10. In an alternative embodiment the marker light 120 and sensor device 10 are connected separately directly to the vehicle power supply 130. In a further alternative embodiment the marker light 120 is connected to the vehicle power supply 130 and the sensor device 10 is connected to the marker light 120 power wire of the marker light 120 and supplied with power via the sensor device 10.

In the shown example in Figure 1b the housing or encapsulation 11 is mainly tubular and adapted to be received in an opening or recess 111 in the vehicle body 110. The housing or encapsulation 11 of the sensor device 10 is at one end provided with a flange 12 via which the sensor device 10 can be arranged to the vehicle body 110 via suitable fastening means 13.

The figure also show that the marker light 120 is arranged to the vehicle body 110 by means of suitable fastening means 122.

Accordingly, in this embodiment the sensor device 10 will extend from the exterior surface of the vehicle body 110 and inside the vehicle body 110.

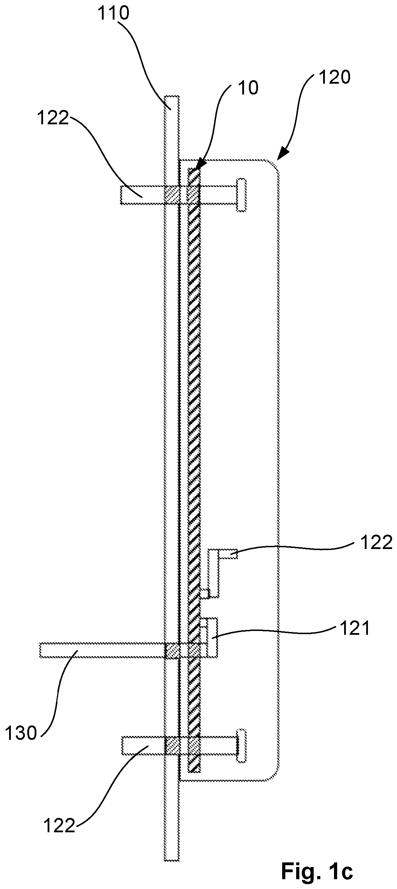

Reference is also made to Figure 1c which is a principle drawing of integration of a sensor device 10 according to the present invention in a (LED) side marker light of a vehicle, seen in a cross-sectional view. In this embodiment the above described sensor device 10 is integrated in the side marker light 120, e.g. by arrangement to the same fastening means 122 as the marker light 120 is arranged to the vehicle body 110 with. Accordingly, in this embodiment the sensor device 10 is enclosed by the marker light 120 and arranged to an exterior surface of the vehicle body 110.

In a further embodiment, not shown, the sensor device 10 is arranged as a combination of the embodiments described above, wherein some components of the sensor device 10 is integrated in the marker light 120 and some components of the sensor device 10 is arranged behind the marker light 120, e.g. the energy storage can be arranged behind the marker light.

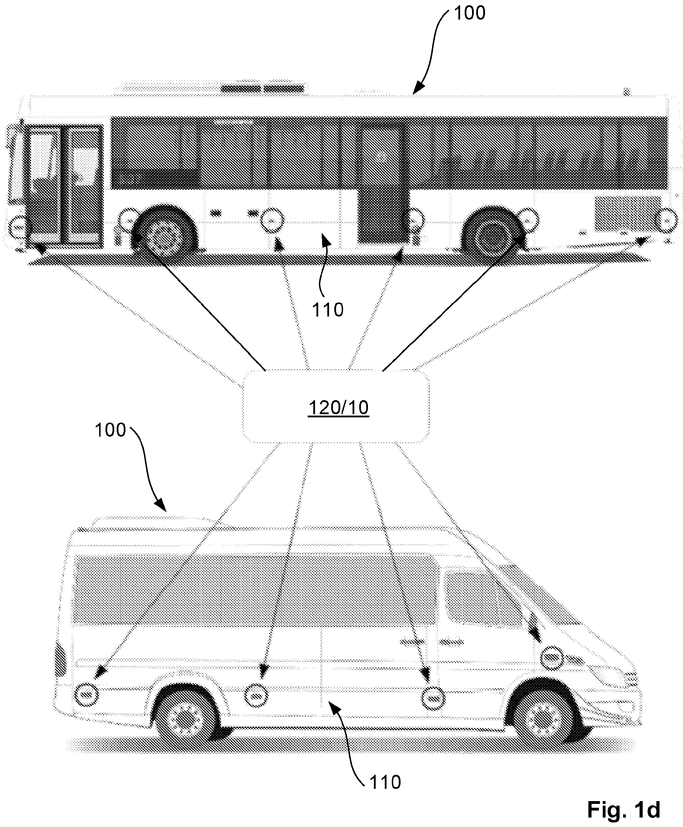

Reference is now made to Figure 1d which shows examples of arrangement of sensor devices 10 according to the present invention in side marker lights 120 of a vehicle 100.

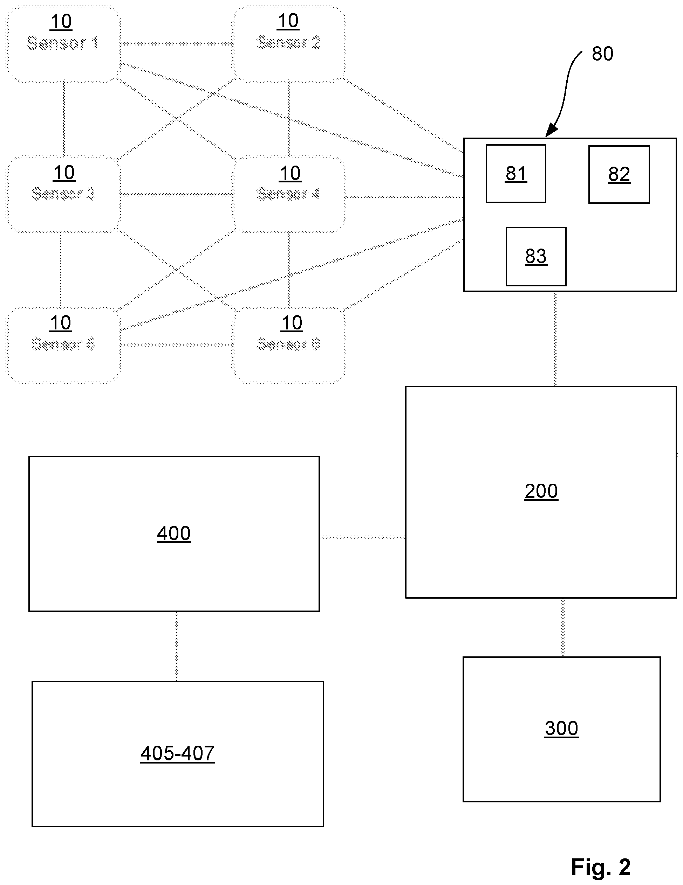

Reference is now made to Figure 2 which is a principle drawing of a system according to the present invention. The system comprises in addition to the mentioned sensor devices 10 arranged to the body 110 of the vehicle 100 by integration in the marker lights 120, a data acquisition unit 80 is arranged on the vehicle 100 provided with a local communication module 81 arranged to communicate wirelessly with the sensor devices 10 arranged on the vehicle 100. The data acquisition unit 80 is further provided with an external communication module 82, such as GSM, Wi-Fi, NB long range radio, NB-LTE, LoRa or similar long range communication, arranged to forward the measured sensor data by the sensor devices 10 to an external cloud (web) or local server 200 for storage of sensor data.

The data acquisition unit 80 is in a further embodiment provided with a global positioning system 83 providing position information of the vehicle 100 and the sensor devices 10 arranged thereon. The data acquisition unit 80 can further be arranged for communication with a vehicle driver platform 405 via the external cloud or local server 200 or via the local 81 or external 82 communication module, enabling the driver to enter its identification code, as well as provide the driver with information, messages, warnings, faults or similar information.

The system according to the present invention further comprises a data processing device 300 provided with means and/or software for filtering the sensor data and machine learning of sensor data stored in the external cloud or local server 200.

The system according to the present invention further comprises an operational device 400 forming an Operation and maintenance center. The operational device 400 is further arranged for presentation of information, messages, warnings and faults from stored and filtered sensor data. The operational device 400 is further arranged for communication with one or more of: a vehicle driver platform 405, workshop platform 406 and management platform 407, which will be further described below.

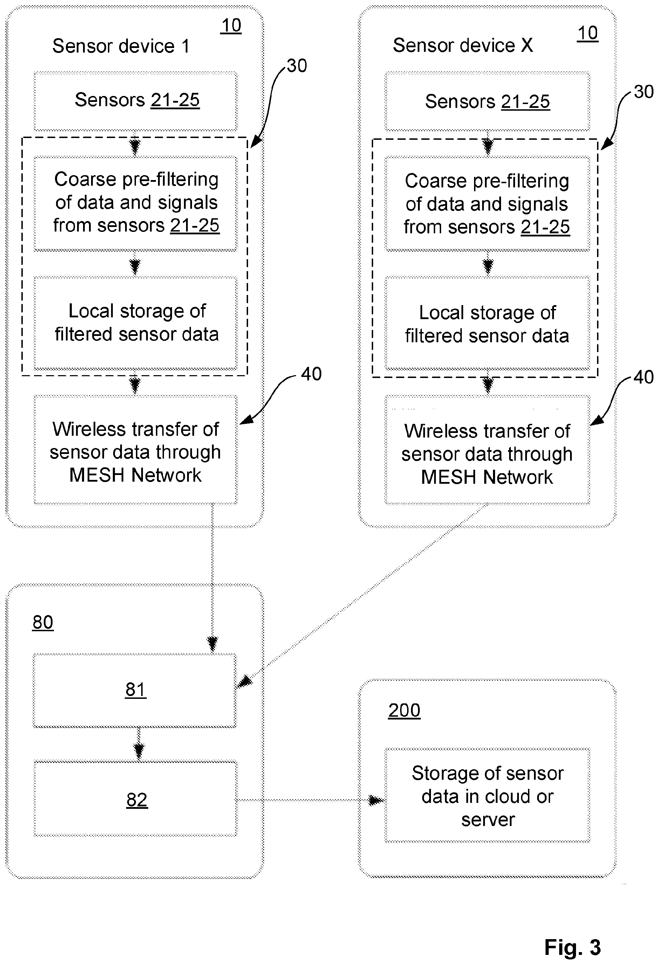

Reference is now made to Figure 3 which is a principle drawing of a sensor environment and local processing of sensor data in a system according to the present invention. The sensor control device 30 of the sensor device 10 is arranged for collecting sensor data from the sensor of the sensor module 20, and is further provided with means and/or software for performing coarse pre-filtering of data and signals from the respective sensors 21-25, as well as storage of the filtered sensor data on a local memory. The sensor control device 30 is further provided with a database containing acoustic signatures of body damages and the sensor control device 30 is provided with means and/or software for comparing measurements of the acoustic sensor(s) 22 of the sensor module 20 with the stored acoustic signatures in the database to detect damages to the body of the vehicle, as well as locating the position of the damage based on information from acoustic sensors 22 from several sensor device 10. Accordingly, by e.g. comparing the sound level registered by acoustic sensors 22 of sensor devices 10 distributed along a side of a body 110 of a vehicle 100 one can achieve a location of the position of the damage.

The sensor data can then next be forwarded to the data acquisition unit 80 via the communication device 40 directly, or via communication devices 40 in other sensor devices 10 in the MESH Network by means of the local communication module 81. The data acquisition unit 80 is further arranged to forward the received sensor data to an external cloud or local server 200 via the external communication module 82.

The external cloud or local server 200 is arranged to store sensor data in the external cloud or local server 200 for further processing.

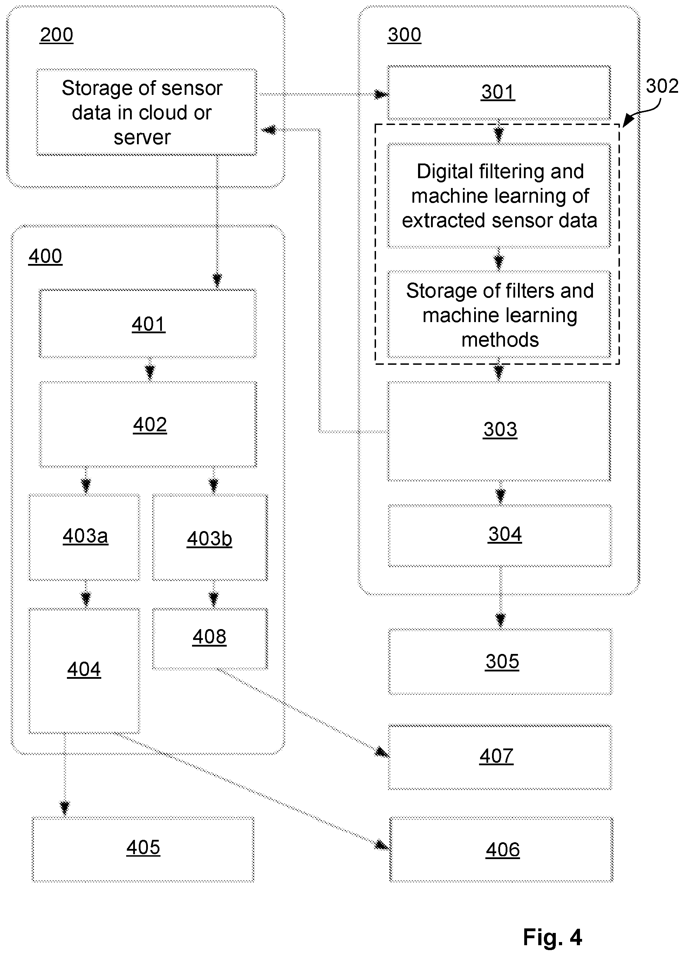

Reference is now made to Figure 4 which is a principle drawing of a computing environment of a system according to the present invention which also shows post (further) processing of collected sensor data.

The system according to the present invention comprises, for post/further processing of sensor data, a data processing device 300 provided with a data extraction module 301 arranged for extracting sensor data from the data storage of the external cloud or local server 200. The data processing device 300 is further provided with means and/or software 302 for digital filtering and machine learning of the extracted sensor data from the external cloud or local server 200, as well as storage of filters and machine learning methods in a storage module 303 for storage of processed data. The storage module 303 is further arranged for forwarding the processed data to the external cloud or local server 200 for storage therein. The data processing device 300 is further provided with a data processing API 304 enabling communication with a filter and data processing platform 305. By means of machine learning one can make predictions or calculations based on large amounts of data. Machine learning can be divided in several methods, which is known as e.g. supervised learning, unsupervised learning, semi-supervised learning and reinforcement learning that enable different approaches for processing of extracted sensor data depending on the result to be achieved. Accordingly, by providing the data processing device 300 with means and/or software 302 for machine learning the extracted sensor data can be processed to find patterns, trends and relationships, especially related to damages and driving behaviour. In addition the data processing device 300 can be provided with means and/or software for artificial intelligence enabling the data processing device 300 to make (ethical) choices/decisions. Accordingly, machine learning can be used to improve models and provide decision support.

According to the present invention the system further comprises an operational device 400 provided with a data extraction module 401 for extracting sensor data, as well as processed data from the data processing device 300. The operation device 400 is further provided with a presentation module 402 provided with means and/or software for presentation of information, messages, warnings, fault and other relevant information.

The operational device 400 is provided with one or more report modules 403a-b, in the shown example comprising two report modules in the form of a workshop report module 403a and a management report module 403b enabling relevant information to be distributed to relevant receivers. In the example, the information from the workshop report module 403a can be distributed to a workshop or vehicle driver by means of an API module for workshop and vehicle driver 404 in communication with a vehicle driver platform 405 and workshop platform 406. E.g. the information can be sent to the vehicle driver platform 405 where the vehicle driver platform 405 is arranged to receive and display a SMS or comprises and APP for displaying information. The management report module 403b is in the example distributing information to a management platform 407 via a management module API 408.

Accordingly, by means of the operational device 400 relevant information can be tailored the relevant receiver.

### Modifications

By connecting the system according to the present invention with the vehicles present sensors and informational system, the data from the vehicle can be stored and be available for the data acquisition unit, which further makes the data available for the data processing device 300 and operational device 400.

## Claims

1. System for detecting vehicle body damage caused to a body (110) of a vehicle (100), wherein the system comprises numerous sensor devices (10), wherein the numerous sensor devices (10) are arranged in connection with an exterior surface of the vehicle body (110), wherein the sensor devices (10) comprises a sensor module (20) provided with at least one acoustic sensor (22), and a sensor control device (30) provided with means and/or software performing coarse pre-filtering of sensor data, and a communication device (40), wherein the system further comprises a data acquisition unit (80) comprising a local communication module (81) for communication with the sensor devices (10) and an external communication module (82) for communication with an external cloud or local server (200), **characterized in that** the sensor control device (30) is provided with a database containing acoustic signatures of body damages and the sensor control device (30) is provided with means and/or software for comparing measurements of the acoustic sensor(s) (22) of the sensor module (20) with the stored acoustic signatures in the database to detect damages to the body (110) of the vehicle (100).

2. System for detecting vehicle body damage according to claim 1, **characterized in that** the data acquisition unit (80) is provided with a global positioning system (83).

3. System for detecting vehicle body damage according to claim 1, **characterized in that** the sensor module (20) comprises at least one vibration sensor (21), compass sensor or gyroscope (23), temperature sensor (24) and/or smoke and/or fire detection sensor (25).

4. System for detecting vehicle body damage according to any one of the preceding claims, **characterized in that** the sensor devices (10) are integrated in connection with side marker lights (120) of the vehicle (100).

5. System for detecting vehicle body damage according to claim 1, **characterized in that** the sensor control device (30) is provided with means and/or software for locating the position of the damage based on information from acoustic sensors (22) from several sensor device (10).

6. System for detecting vehicle body damage according to any one of the preceding claims, **characterized in that** the system further comprises a data processing device (300) comprising a data extraction module (301) extracting sensor data from the external cloud or local server (200), and further provided with means and/or software (302) for digital filtering and machine learning of the extracted sensor data, and a storage module (303) for storing processed data to the external cloud or local server (200).

7. System for detecting vehicle body damage according to claim 6, **characterized in that** the system further comprises an operational device (400) comprising a data extraction module (401) for extracting sensor data and processed data from the data processing device (300), wherein the operational device (400) further comprises a presentation module (402) provided with means and/or software for presentation of relevant information, as well as report modules (403a-b) enabling relevant information to be distributed to relevant receiver platforms (405-407).

8. System for detecting body damage according to any one of the preceding claims, **characterized in that** the sensor control device (30) is provided with means and/or software for filtering transient noise from a vehicles power supply (130), and storing required amounts of power in an energy storage (60) to operate the associated sensor(s) (21-25).

9. System for detecting body damage according to any one of the preceding claims, **characterized in that** the sensor device (10) comprises at least one energy storage (60) and at least one energy harvester (70) providing power to charge the at least one energy storage (60) powering the sensor device (10).

10. System for detecting body damage according to claim 6, **characterized in that** the data processing device (300) with means and/or software (302) for machine learning is arranged to process the extracted sensor data to find patterns, trends and relationships.

## Patentansprüche

1. System zum Detektieren von Fahrzeugkarosserieschaden, der an einer Karosserie (110) eines Fahrzeugs (100) verursacht wird, wobei das System zahlreiche Sensorvorrichtungen (10) umfasst, wobei die zahlreichen Sensorvorrichtungen (10) in Verbindung mit einer externen Oberfläche der Fahrzeugkarosserie (110) angeordnet sind, wobei die Sensorvorrichtungen (10) ein Sensormodul (20), das mit mindestens einem akustischen Sensor (22) versehen ist, und eine Sensorsteuervorrichtung (30), die mit Mitteln und/oder Software, die eine grobe Vorfilterung von Sensordaten durchführt, versehen ist, und eine Kommunikationsvorrichtung (40) umfassen, wobei das System ferner eine Datenerfassungseinheit (80) umfasst, umfassend ein lokales Kommunikationsmodul (81) für eine Kommunikation mit den Sensorvorrichtungen (10) und ein externes Kommunikationsmodul (82) für die Kommunikation mit einer externen Cloud oder einem lokalen Server (200), **dadurch gekennzeichnet, dass** die Sensorsteuervorrichtung (30) mit einer Datenbank versehen ist, die akustische Signaturen von Fahrzeugkarosserieschäden enthält, und die Sensorsteuervorrichtung (30) mit Mitteln und/oder Software versehen ist zum Vergleichen von Messungen des/der akustischen Sensors/Sensoren (22) des Sensormoduls (20) mit den gespeicherten akustischen Signaturen in der Datenbank, um Schäden an der Karosserie (110) des Fahrzeugs (100) zu detektieren.

2. System zum Detektieren von Fahrzeugkarosserieschaden nach Anspruch 1, **dadurch gekennzeichnet, dass** die Datenerfassungseinheit (80) mit einem Global Positioning System (83) versehen ist.

3. System zum Detektieren von Fahrzeugkarosserieschaden nach Anspruch 1, **dadurch gekennzeichnet, dass** das Sensormodul (20) mindestens einen Schwingungssensor (21), einen Kompasssensor oder ein Gyroskop (23), einen Temperatursensor (24) und/oder einen Rauch- und/oder Feuerdetektionssensor (25) umfasst.

4. System zum Detektieren von Fahrzeugkarosserieschaden nach einem der vorstehenden Ansprüche, **dadurch gekennzeichnet, dass** die Sensorvorrichtungen (10) in Verbindung mit Seitenmarkierungsleuchten (120) des Fahrzeugs (100) integriert sind.

5. System zum Detektieren von Fahrzeugkarosserieschaden nach Anspruch 1, **dadurch gekennzeichnet, dass** die Sensorsteuerungsvorrichtung (30) mit Mitteln und/oder Software zum Lokalisieren der Position des Schadens basierend auf Informationen von akustischen Sensoren (22) von mehreren Sensorvorrichtungen (10) versehen ist.

6. System zum Detektieren von Fahrzeugkarosserieschaden nach einem der vorstehenden Ansprüche, **dadurch gekennzeichnet, dass** das System ferner eine Datenverarbeitungsvorrichtung (300) umfasst, umfassend ein Datenextraktionsmodul (301), das Sensordaten von der externen Cloud oder dem lokalen Server (200) extrahiert und ferner mit Mitteln und/oder Software (302) zum digitalen Filtern und maschinellem Lernen der extrahierten Sensordaten versehen ist, und ein Speichermodul (303) zum Speichern von verarbeiteten Daten in der externen Cloud oder auf dem lokalen Server (200).

7. System zum Detektieren von Fahrzeugkarosserieschaden nach Anspruch 6, **dadurch gekennzeichnet, dass** das System ferner eine Betriebsvorrichtung (400) umfasst, umfassend ein Datenextraktionsmodul (401) zum Extrahieren von Sensordaten und verarbeiteten Daten von der Datenverarbeitungsvorrichtung (300), wobei die Betriebsvorrichtung (400) ferner ein Präsentationsmodul (402), das mit Mitteln und/oder Software für eine Präsentation relevanter Informationen versehen ist, sowie Berichtsmodule (403a-b), die ermöglichen, dass relevante Informationen an relevante Empfängerplattformen (405-407) verteilt werden, umfasst.

8. System zum Detektieren von Fahrzeugkarosserieschaden nach einem der vorstehenden Ansprüche, **dadurch gekennzeichnet, dass** die Sensorsteuervorrichtung (30) mit Mitteln und/oder Software zum Filtern von Geräuschen durch Einschwingvorgänge von einer Fahrzeugstromversorgung (130) versehen ist und erforderliche Strommengen in einem Energiespeicher (60) speichert, um den/die zugehörigen Sensor(en) (21-25) zu betreiben.

9. System zum Detektieren von Fahrzeugkarosserieschaden nach einem der vorstehenden Ansprüche, **dadurch gekennzeichnet, dass** die Sensorvorrichtung (10) mindestens einen Energiespeicher (60) und mindestens einen Energie-Harvester (70) umfasst, der Strom bereitstellt, um den mindestens einen Energiespeicher (60) zu laden, der die Sensorvorrichtung (10) versorgt.

10. System zum Detektieren von Fahrzeugkarosserieschaden nach Anspruch 6, **dadurch gekennzeichnet, dass** die Datenverarbeitungsvorrichtung (300), mit Mitteln und/oder Software (302) zum maschinellen Lernen, angeordnet ist, um die extrahierten Sensordaten zu verarbeiten, um Muster, Trends und Beziehungen zu finden.

## Revendications

1. Système permettant de détecter des dommages à la carrosserie (110) d'un véhicule (100), dans lequel le système comprend de nombreux dispositifs capteurs (10), dans lequel les nombreux dispositifs capteurs (10) sont agencés en connexion avec une surface extérieure de la carrosserie (110) du véhicule, dans lequel les dispositifs capteurs (10) comprennent un module de capteur (20) doté d'au moins un capteur acoustique (22), et un dispositif de commande de capteur (30) doté d'un moyen et/ou d'un logiciel effectuant un pré-filtrage grossier de données de capteur, et un dispositif de communication (40), dans lequel le système comprend en outre une unité d'acquisition de données (80) comprenant un module de communication locale (81) pour une communication avec les dispositifs capteurs (10) et un module de communication externe (82) pour une communication avec un serveur en nuage externe ou local (200), **caractérisé en ce que,** le dispositif de commande de capteur (30) est doté d'une base de données contenant des signatures acoustiques de dommages à la carrosserie et le dispositif de commande de capteur (30) est doté d'un moyen et/ou d'un logiciel permettant de comparer des mesures du ou des capteurs acoustiques (22) du module de capteur (20) avec les signatures acoustiques stockées dans la base de données afin de détecter les dommages à la carrosserie (110) du véhicule (100).

2. Système de détection de dommages à la carrosserie d'un véhicule selon la revendication 1, **caractérisé en ce que** l'unité d'acquisition de données (80) est dotée d'un système mondial de positionnement (83).

3. Système de détection de dommages à la carrosserie d'un véhicule selon la revendication 1, **caractérisé en ce que** le module de capteur (20) comprend au moins un capteur de vibration (21), un capteur de boussole ou un gyroscope (23), un capteur de température (24) et/ou un capteur de détection de fumée et/ou d'incendie (25).

4. Système de détection de dommages à la carrosserie d'un véhicule selon l'une quelconque des revendications précédentes, **caractérisé en ce que** les dispositifs capteurs (10) sont intégrés en connexion avec des feux de position latéraux (120) du véhicule (100).

5. Système de détection de dommages à la carrosserie d'un véhicule selon la revendication 1, **caractérisé en ce que** le dispositif de commande de capteur (30) est doté d'un moyen et/ou d'un logiciel permettant de situer la position du dommage sur la base des informations provenant de capteurs acoustiques (22) provenant de plusieurs dispositifs capteurs (10).

6. Système de détection de dommages à la carrosserie d'un véhicule selon l'une quelconque des revendications précédentes, **caractérisé en ce que** le système comprend en outre un dispositif de traitement de données (300) comprenant un module d'extraction de données (301) extrayant des données de capteur provenant du serveur en nuage externe ou local (200), et doté en outre d'un moyen et/ou d'un logiciel (302) pour un filtrage numérique et un apprentissage automatique des données de capteur extraites, et d'un module de stockage (303) permettant de stocker les données traitées dans le serveur en nuage externe ou local (200).

7. Système de détection de dommages à la carrosserie d'un véhicule selon la revendication 6, **caractérisé en ce que** le système comprend en outre un dispositif opérationnel (400) comprenant un module d'extraction de données (401) permettant d'extraire des données de capteur et des données traitées provenant du dispositif de traitement de données (300), dans lequel le dispositif opérationnel (400) comprend en outre un module de présentation (402) doté d'un moyen et/ou d'un logiciel pour une présentation d'informations pertinentes, ainsi que des modules de rapport (403a-b) permettant de distribuer des informations pertinentes à des plates-formes réceptrices pertinentes (405-407).

8. Système de détection de dommages à la carrosserie d'un véhicule selon l'une quelconque des revendications précédentes, **caractérisé en ce que** le dispositif de commande de capteur (30) est doté d'un moyen et/ou d'un logiciel permettant de filtrer des bruits transitoires provenant d'une alimentation électrique de véhicules (130) et de stocker les quantités d'énergie nécessaires dans un accumulateur d'énergie (60) afin de faire fonctionner le ou les capteurs associés (21 à 25).

9. Système de détection de dommages à la carrosserie d'un véhicule selon l'une quelconque des revendications précédentes, **caractérisé en ce que** le dispositif capteur (10) comprend au moins un accumulateur d'énergie (60) et au moins un récupérateur d'énergie (70) fournissant de l'énergie afin de charger l'au moins un accumulateur d'énergie (60) alimentant le dispositif capteur (10).

10. Système de détection de dommages à la carrosserie d'un véhicule selon la revendication 6, **caractérisé en ce que** le dispositif de traitement de données (300) doté d'un moyen et/ou d'un logiciel (302) pour un apprentissage automatique est agencé de sorte à traiter les données de capteur extraites afin de trouver des modèles, des tendances et des relations.
